(19) Europäisches Patentamt
European Patent Office
Office européen des brevets

(11) **EP 1 048 436 A1**

(12) **EUROPEAN PATENT APPLICATION**
published in accordance with Art. 158(3) EPC

(43) Date of publication:
02.11.2000 Bulletin 2000/44

(51) Int. Cl.7: **B29C 49/48**, B29C 49/64,
B29C 49/04, B29B 11/10

(21) Application number: 98961555.4

(22) Date of filing: 25.12.1998

(86) International application number:
PCT/JP98/05906

(87) International publication number:
WO 99/33634 (08.07.1999 Gazette 1999/27)

(84) Designated Contracting States:
DE FR GB SE

(30) Priority: 26.12.1997 JP 36032497
24.03.1998 JP 7585898

(71) Applicant:
Nippon Steel Chemical Co., Ltd.
Tokyo 141-0031 (JP)

(72) Inventors:
• FURUKI, Satoshi
Kimitsu-shi, Chiba 299-1171 (JP)
• ANDOH, Hideki
Kisarazu-shi, Chiba 292-0826 (JP)

(74) Representative: Whalley, Kevin
MARKS & CLERK,
57-60 Lincoln's Inn Fields
London WC2A 3LS (GB)

(54) **BLOW MOLDING DEVICE AND METHOD OF MOLDING**

(57) Provided are a blow molding apparatus characterized by comprising:

(a) m (m≧1) sets of extruders for melting and extruding m kinds of resins;
(b) a multilayer die head which has circular passages for resins to form a multilayer parison of n layers, wherein n has a relation of n≦m and in which two kinds of different molten resins are introduced into at least one of the above circular passages for resins; and
(c) a mold equipment which is a pair of left and right molds forming a cavity for blow molding, wherein plural heat transfer medium passages branching away from an inlet side collecting pipe are disposed close to a cavity surface in the mold in a parallel path, and each passage is connected to an outlet side collecting pipe; high temperature heat transfer medium-feeding equipment for feeding a high temperature heat transfer medium and low temperature heat transfer medium-feeding equipment for feeding a low temperature heat transfer medium are connected to the inlet side collecting pipe and the outlet side collecting pipe through pipelines via switching valves to constitute independent heat transfer medium-circulating lines respectively; and the high temperature heat transfer medium and the low temperature heat transfer medium are alternately switched by switching operation of the switching valves, whereby the high temperature heat transfer medium or the low temperature heat transfer medium is allowed to pass from the inlet side collecting pipe toward the outlet side collecting pipe through the heat transfer medium passages in the mold to switch a cavity surface temperature over to a high temperature or a low temperature in a short time, a blow molding method and a blow-molded article molded using the above apparatus and method.

*FIG. 4*

**Description**

Technical Field

The present invention relates to a blow molding apparatus of a thermoplastic resin, a blow molding method and a molded article thereof, specifically to a blow molding apparatus which has high transferability of a surface form of a mold cavity in a short molding cycle and which is suitably used for producing industrial parts that comprise molded articles having specular surfaces and that require beautiful surface appearance, for home electric appliances and OA products, household appliances, office furniture, automobile outside plates and trim, etc., a blow molding method using the same and a blow-molded article molded by the same method.

Background Art

In blow molding of a thermoplastic resin, a parison which is a cylindrical molten resin is extruded or injected between a pair of left and right molds forming cavities, with them opened, and then the molds are closed to blow the air of 0.5 to 1 MPa, whereby molding is carried out. This molding pressure is low as compared with that in injection molding, and therefore transferability of a surface form of a mold cavity has so far been low, so that it has been very difficult to turn the surfaces of the molded articles into specular faces even if the surface of a mold cavity is subjected to, for example, specular processing. In products to which a surface smoothness is required, the molded articles have so far been subjected to finish processing such as mechanical polishing of the surfaces after molding, but the process includes the problem that an increase in the steps results in reducing the productivity, and this has been the largest reason for hesitating to employ blow-molded articles.

Accordingly, it has been tried in many cases to improve a blow molding technique itself without relying on finish processing to elevate transferability of a surface form of a mold cavity. Fundamentally, it is important that a molten resin (parison) has high flowability at the moment that it contacts a mold cavity, and the following rough classifications are possible depending on how to achieve the state thereof:

(1) to elevate a temperature of the resin,
(2) to use a resin having a reduced molecular weight,
(3) to elevate a pressing pressure onto a mold cavity,
(4) to make the temperature of the resin less liable to be reduced, and
(5) to elevate a temperature on the surface of the mold cavity.

Proposed respectively are to the above item (1), for example, a method in which a surface of a parison is heated in a moment (Japanese Patent Application Laid-Open No. Hei 2-202426) and to the above item (2), for example, a method in which a material having a large MFR (melt flow rate) is selected for an outer layer in multilayer blow molding (Japanese Patent Application Laid-Open No. Hei 5-8355). However, they are not preferred since draw-down of a parison is accelerated. The above item (3) can be classified into a method in which a blowing pressure is elevated (Japanese Patent Publication No. Hei 2-292018) and a method in which air between a resin and a mold cavity is forcedly discharged by vacuum suction from the surface of the mold cavity (Japanese Patent Publication No. Hei 5-37805). However, the former is not preferred since lost are the advantages (low facility cost, low residual stress and the like) of blow molding which is a method of molding at a low pressure, and the latter is not preferred as well since a trace of the discharge hole for vacuum suction remains on a surface of the molded article.

The item (4) relates to a technique in which a mold is coated on the surface thereof with a material having a low heat conductivity to thereby prevent a molten resin in a cavity from being quickly cooled and solidified to obtain a molded article having good surface smoothness. Proposed respectively as materials having a low heat conductivity are, for example, a coating layer comprising a fluororesin or an epoxy resin in Japanese Patent Application Laid-Open No. Sho 54-142266, a coating layer comprising various metal oxides or ceramics in Japanese Patent Application Laid-Open No. Hei 4-211912 and a coating layer comprising an epoxy resin or a polyimide resin in Japanese Patent Application Laid-Open No. Hei 5-111937, ditto 5-169456, ditto 6-91736 and ditto 6-246797. However, these methods have the problems that a coating layer has a low adhesive property to a mold material and that the coating layer is low in durability and the mold has a short life. Further, a complicated step is required for forming a coating layer, and therefore the mold cost grows high. Accordingly, they are not practical.

An idea of elevating a mold temperature in the item (5) has been considered to be the most general and useful method. However, a method in which a conventional mold temperature-controlling apparatus is used and a heat transfer medium is allowed to pass through a passage in the mold to control the temperature has not so far been successful. The reason thereof is that in general, when molding is carried out at a fixed mold temperature in molding a thermoplastic resin, the higher mold temperature brings about the better transferability of the mold surface, while a cooling and solidifying time of the molten resin is prolonged. Accordingly, a method in which a mold temperature is caused to go up and down during one cycle has been developed. To be specific, there has so far been tried, a method in which a high temperature heat transfer medium for heating and a low temperature heat transfer medium for cooling are allowed to pass through the same passage in a mold by switching valves at an inlet and an outlet of the mold. However, it is not easy as well to shorten a molding cycle by such a method. The reasons thereof include that firstly, a response speed of the temperature on the mold surface is reduced because of a large heat capacity of the mold and that secondarily, when cooling is switched over, for example, to heating, a low temperature heat transfer medium remaining in a pipeline from an inlet valve through passages in the mold to an outlet valve flows into a heating circuit and high temperature heat transfer medium-feeding equipment has to heat as well this surplus low temperature heat transfer medium flowing therein, so that increases in a heat loss and a cycling time are brought about.

For the purpose of solving such problems to accelerate a response to heating and cooling, provided is a method in which a thin wall structure is employed for a mold to reduce the heat capacity (Japanese Patent Application Laid-Open No. Hei 7-198534). However, an applicable structure is restricted because of the problem of insufficient mold strength, and therefore the structure is not practical method. Further, provided in Japanese Patent Application Laid-Open No. Hei 8-276432 is a method in which in order to make up insufficient strength brought about by reducing a wall thickness, a pressure is pre-applied to a space in a reverse side to a molding surface so as to contend with a pressure applied to a resin. However, it is difficult to obtain a molded article having a high dimensional accuracy with such method. Further, provided in Japanese Patent Application Laid-Open No. Hei 2-88216 is a method in which an intermediate layer partitioned off by mold frames is provided between the surface part of a mold including a pipeline for controlling a temperature and the mold body (back plate) to be packed with a heat insulating material or in which a reinforcing rib having a passing hole for a heating or cooling medium is disposed to reduce a heat capacity of the surface part of the mold and the mold surface is heated by radiation from the cavity side to thereby shorten a molding cycle.

Among these methods, the method in which the reinforcing rib is disposed has less problems of the insufficient mold strength, but in the method, specific consideration is not given to arrangement of a pipeline for controlling a temperature using a heat transfer medium, and an auxiliary heating means for heating the mold surface by radiation in addition to the temperature-controlling equipment is added. A lot of methods using such auxiliary heating means are found in addition to this reported example, but they have the common problems that it is technically difficult to install auxiliary heating equipment in an inside of a cavity and the facility cost is expensive and that dispersion in a mold surface temperature is liable to be caused. Accordingly, it is difficult to apply them to practical production in a factory. Further, a method making use of multilayer blow molding is provided as a method for accelerating a response speed to heating and cooling in Japanese Patent Application Laid-Open No. Hei 9-277361. This is a method free of defects except that it is premised on multilayer blow molding, and it is expected to achieve further more effects by using in combination with an excellent mold temperature-controlling system.

As described above, it is not so difficult to elevate transferability of a mold in blow molding, but there is the common knowledge that it is difficult to achieve it in a relatively short molding cycle with conventional mold temperature-controlling equipment using a heat transfer medium, and therefore it has been an ordinary solving method to provide any auxiliary heating means. On the other hand, however, it is strongly requested from an economical point of view to elevate transferability with a relatively simple (that is, low cost) facility. In light of such circumstances, an object of the present invention is to provide a blow molding apparatus which uses mold temperature-controlling equipment to solve the conventional problems and a die head capable of carrying out specific multilayer blow molding to allow good mold transferability to be compatible with shortening of a molding cycle, a molding method using the same and a hollow structure article having an excellent surface appearance which is produced by the same method.

Disclosure of the Invention

Intensive researches continued by the present inventors in order to solve the problems described above have resulted in finding that the object can be achieved without requiring specific auxiliary heating (cooling) equipment by using a multilayer blow molding technique in combination with mold equipment in which a pipeline in a mold and a line for feeding a heat transfer medium to the mold are optimally designed and which is devised so that a lot of the heat transfer medium can be passed through a passage in the inside of the mold in a turbulent flow state in a pass number reduced to the utmost, preferably in a short time of only one pass, and thus the present invention has been completed.

That is, the blow molding apparatus of the present invention is a blow molding apparatus using mold equipment, wherein the mold equipment comprises a pair of left and right molds forming a cavity for blow molding; plural heat transfer medium passages branching away from an inlet side collecting pipe are disposed close to a cavity surface in the mold in a parallel path, and each passage is connected to an outlet side collecting pipe; high temperature heat transfer medium-feeding equipment for feeding a high temperature heat transfer medium and low temperature heat transfer medium-feeding equipment for feeding a low temperature heat transfer medium are connected to the inlet side collecting pipe and the outlet side collecting pipe described above through pipelines via switching valves to constitute independent heat transfer medium-circulating lines respectively; and the high temperature heat transfer medium and the low temperature heat transfer medium coming from the respective circulating lines are alternately switched by switching operation of the switching valves, whereby the high temperature heat transfer medium or the low temperature heat transfer medium is allowed to pass from the inlet side collecting pipe toward the outlet side collecting pipe through the respective heat transfer medium passages in the mold to switch a cavity surface temperature over to a high temperature or a low temperature in a short time. Further, it is a blow molding apparatus characterized by comprising a combination of the following structural elements (a) to (c):

(a) one or plural extruders installed for the purpose of melting and extruding m kinds of resins (provided that m is 1 or more);
(b) a multilayer die head which has circular passages for resins to form a single layer parison or a multilayer parison of n layers, wherein n has a relation of $n \leqq m$, with m kinds of molten resins being introduced, wherein two kinds of different molten resins are introduced into at least one of the above circular passages for resins; and
(c) mold equipment which is a pair of left and right molds forming a cavity for blow molding, wherein plural heat transfer medium passages branching away from an inlet side collecting pipe are disposed close to a cavity surface in the mold in a parallel path, and each passage is connected to an outlet side collecting pipe; high temperature heat transfer medium-feeding equipment for feeding a high temperature heat transfer medium and low temperature heat transfer medium-feeding equipment for feeding a low temperature heat transfer medium are connected to the inlet side collecting pipe and the outlet side collecting pipe described above through pipelines via switching valves to constitute independent heat transfer medium-circulating lines respectively; and the high temperature heat transfer medium and the low temperature heat transfer medium coming from the respective circulating lines are alternately switched by switching operation of the switching valves, whereby the high temperature heat transfer medium or the low temperature heat transfer medium is allowed to pass from the inlet side collecting pipe toward the outlet side collecting pipe through the respective heat transfer medium passages in the mold to switch a cavity surface temperature over to a high temperature or a low temperature in a short time.

The blow molding method of the present invention is a blow molding method in which the blow molding apparatus described above is used to allow a heat transfer medium having a high temperature to pass through heat transfer medium passages in a mold from immediately before blow molding to maintain a cavity surface at a high temperature and allow a heat transfer medium having a low temperature to pass through the heat transfer medium passages in a stage of cooling a blow-molded article to maintain the cavity surface at a low temperature, wherein the heat transfer medium is provided with a sufficiently high flow velocity so that it passes through the passages on a turbulent flow condition either at a high temperature or a low temperature.

Further, the blow-molded article of the present invention is characterized by that it is a hollow molded article of a thermoplastic resin molded by the blow molding method described above and the outside surface of the product is composed of resins each having the same (m = 1 described above) or different ($m \geqq 2$) properties on left and right sides with a parting face of a mold being a borderline and that the surface thereof satisfies at least one surface characteristic of a surface roughness of 0.2 $\mu$m or less defined by a center line average roughness (Ra) according to JIS-B0601 and a 60 degree specular glossiness of 60 % or more defined in JIS-K7105.

With respect to the particularly preferred blow molding apparatus of the present invention, the left and right molds in the mold equipment described above each comprise separate bodies of a mold structure forming a cavity surface and a mold body, and a mold structure in which heat transfer medium passages are made in the inside or on the back face thereof is preferred in terms of the effect that a heat capacity of the mold structure whose temperature has to be controlled can be reduced to elevate more a heat transfer response speed.

The preferred blow molding method of the present invention is characterized by that the blow molding apparatus described above is used and when the molded article comprises a single layer (m = n = 1 described above), a cavity surface is maintained at a high temperature of not lower than a DTUL (deflection temperature under loading: according to ASTM-D648) of a resin to be molded from immediately before blow molding through a blow molding stage; then in a cooling stage of the blow-molded article after contacting a cylindrical resin (parison) staying in a molten state with the cavity surface, the cavity surface is cooled down to a low temperature of not higher than the DTUL described above to thereby sufficiently solidify the resin; when the molded article is a multilayer molded article ($m \geqq n \geqq 2$), an outer layer of a multilayer parison comprising n layers is composed of resins each having different properties on left and right sides with a parting face of a pair of left and right molds being a borderline, and a resin constituting a front side outer layer has a DTUL lower than that of a resin constituting a back side outer layer and an inner layer; the cavity surface is maintained at a high temperature of not lower than the DTUL of the front side outer layer resin described above from immediately before blow molding through a blow molding stage; then in a cooling stage of the blow-molded article after contacting the parison with the cavity surface, the cavity surface is cooled down to a low temperature of not higher than the DTUL of the back side outer layer and inner layer resin to thereby sufficiently solidify the resin; and then the molded article is taken out in one molding cycle of 3 minutes or shorter.

Brief Description of the Drawings

Fig. 1 is a whole conceptual drawing showing the blow molding method of the present invention.
Fig. 2 is a sketch schematic drawing showing a die head of the blow molding apparatus of the present invention.
Fig. 3 is a schematic drawing showing a parison in the blow molding method of the present invention.
Fig. 4 is a schematic drawing showing a pipeline-connecting system (parallel path) in mold equipment constituting the blow molding apparatus of the present invention.
Fig. 5 is a schematic drawing showing a pipeline-connecting system (series path) in mold equipment constituting a conventional blow molding apparatus.

Best Mode for Carrying Out the Invention

The embodiment of the present invention shall be explained below in detail. A case of a multilayer molded article shall be explained, but a case of a single layer can be carried out in the same manner, except that only one kind of a resin is used.

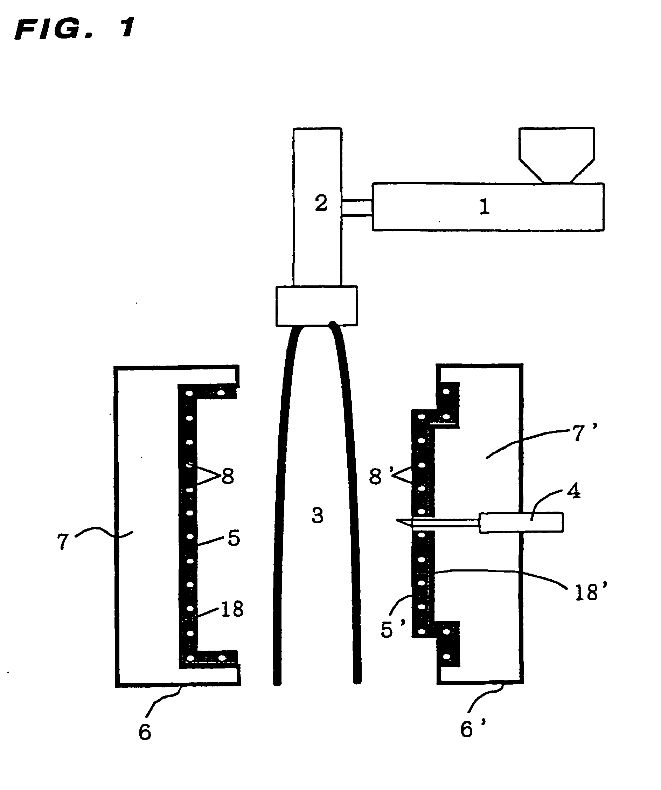

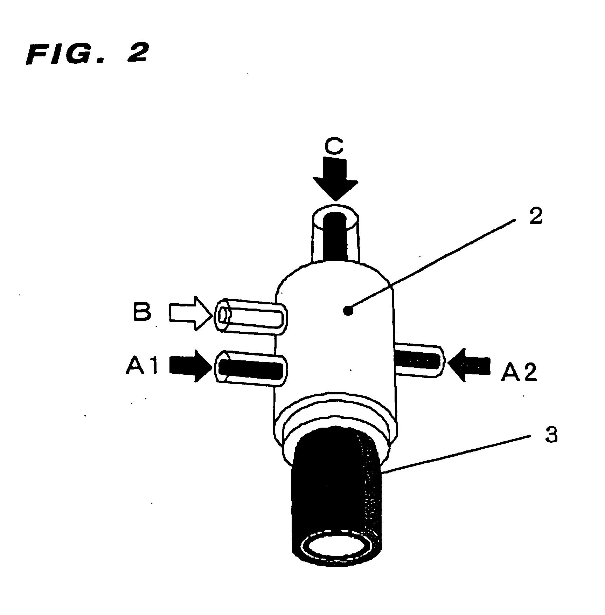

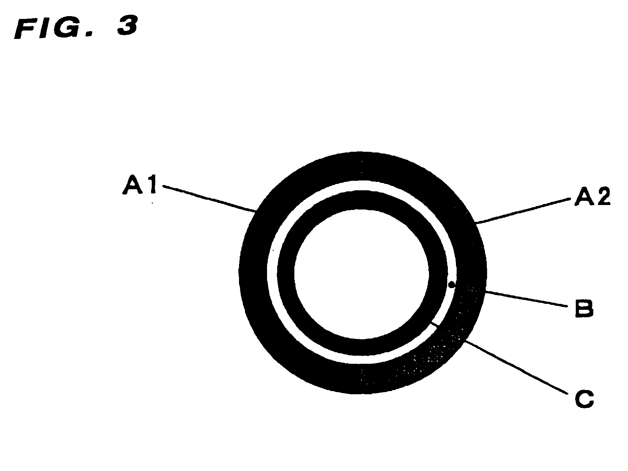

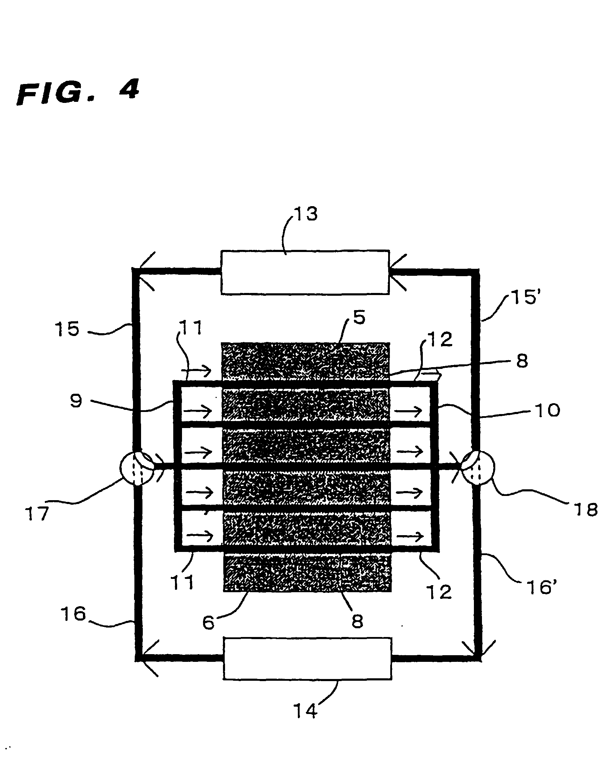

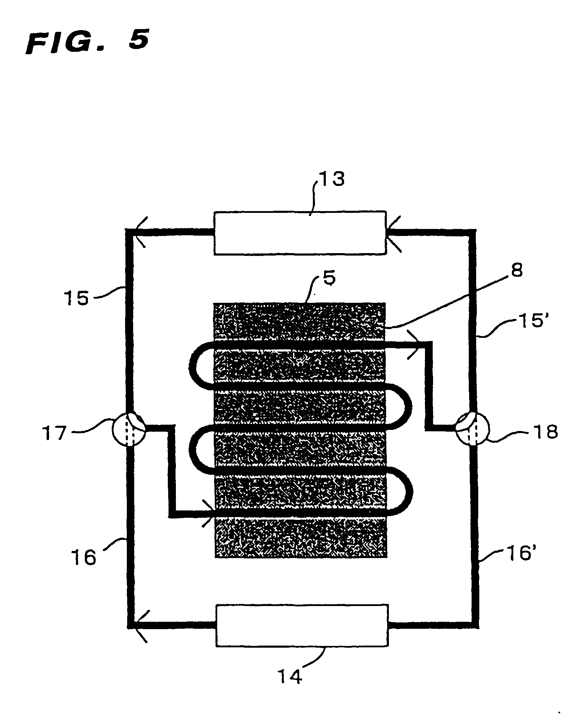

A whole conceptual drawing showing the blow molding method of the present invention is shown in Fig. 1; a sketch schematic drawing showing one example of a die head 2 given in Fig. 1 is shown in Fig. 2; a cross section of a multilayer parison 3 extruded from the die head shown as well in Fig. 1 is shown in Fig. 3; a schematic drawing of a pipeline-connecting system in a mold 6 of one side in mold equipment constituting a part of the blow molding apparatus of the present invention is shown in Fig. 4; and a schematic drawing of a pipeline-connecting system in conventional mold equipment for blow molding is shown in Fig. 5.

First, in blow molding as shown in Fig. 1, a resin molten by heating is extruded as a parison 3 from an extruder 1 via a die head 2 and subjected to clamping between a pair of left and right molds 6, 6' forming a cavity for blow molding and pre-molding, and then the pressurized air is blown into the parison from air-blowing equipment 4 to blow-mold it.

When m kinds of materials are used, m sets of the extruder 1 are required but omitted in Fig. 1. The extruder 1 used in the present invention may be of a system in which a plasticized resin is continuously extruded or a system equipped with a so-called accumulator having a function in which the resin is once charged and then extruded simultaneously, and either one can similarly be applied. The die head 2 and the parison 3 show a case of m = 4 (kinds) and n = 3 (layers) in Fig. 2 and Fig. 3 respectively but shall by no means be restricted thereto. A1, A2, B and C each show different kinds of resins (provided that A2, B and C may be the same resin), and selection of these resins and a surface temperature of the mold cavity is one point of the present invention and shall be described later.

A high temperature heat transfer medium (hereinafter referred to as $A_0$) is allowed to flow into heat transfer medium passage pipelines 8, 8' provided close to the cavity surface of the molds 6, 6' to heat the cavity surface, and in a cooling stage of a blow-molded article, a low temperature heat transfer medium (hereinafter referred to as $B_0$) is then allowed to flow to cool and solidify the resin, followed by opening the molds 6, 6' to take out the molded article. In the present invention, a means for feeding alternately $A_0$ and $B_0$ to mold structures 5, 5' forming the cavity surface of a pair of the left and right molds 6, 6' is specifically improved and shall be explained below in detail.

(1) Fundamental elements of mold equipment

An object of the present invention is to allow good mold transferability onto the whole surface including at least a front side or a back side of a molded article to be compatible with shortening of a molding cycle, and in order to achieve it, a heat transfer efficiency between a heat transfer medium and a mold has to be elevated. In order to realize it, the following four items are principal points in the mold equipment constituting a part of the blow molding apparatus of the present invention as shown in Fig. 1 and Fig. 4:

a. plural heat transfer medium passages 8 are disposed close to the cavity surface of at least one mold 6 (or both molds 6, 6') of a pair of the left and right molds in a parallel path,
b. the heat transfer medium passages 8 are connected to branching pipes 11, 12 of an inlet side collecting pipe 9 and an outlet side collecting pipe 10 in one pass,
c. circulating lines 15, 15' and 16, 16' connected to high temperature heat transfer medium-feeding equipment 13 and low temperature heat transfer medium-feeding equipment 14 in the outside of the mold are connected to the collecting pipes 9, 10 on the inlet side and the outlet side via switching valves 17, 18, and

d. $A_0$ or $B_0$ is allowed to flow through the heat transfer medium passages 8 each at the same temperature preferably in one pass by simultaneously switching the switching valves 17, 18 from the circulating lines 15, 15' and 16, 16' to switch the cavity surface temperature over to a high temperature or a low temperature in a short time: and they are defined as "fundamental elements" in the present invention and shall be explained below in detail.

In Fig. 4, one mold 6 out of a pair of the left and right molds 6, 6' shown in Fig. 1 is explained, and the other mold 6' are connected to a pipeline branched from the heat transfer medium circulating lines in the same mold temperature-controlling equipment or may have separately independent mold temperature-controlling equipment.

The first point in the present invention is that the heat transfer medium passages 8 are disposed close to the cavity surface in a parallel path to thereby elevate a response speed of the mold temperature, particularly the mold surface temperature which exerts an effect on the transferability to a large extent and that the mold structure is designed so that the flow rate of the heat transfer medium is increased to produce a turbulent flow state. In this case, the heat transfer medium passages 8 may be made by drilling the inside of the mold structure 6 forming the cavity surface or may be made by burying pipelines having good heat conduction.

In general, a state in which a fluid flows in a pipe includes two cases; one case is that ways in which fluid particles proceed are parallel to the wall face of the pipe and linear, and the other case is that individual particles cause an eddy current and make an irregular and turbulent motion. The former is called laminar flow, and the latter is called turbulent flow. It is known that laminar flow is generated when a dimentionless number (Reynolds number) represented by $Re = DU\rho/\mu$ is 2100 or less, and turbulent flow is generated when it is more than 2100, wherein D (m) is a pipe diameter; U (m/h) is a flow velocity; $\rho$ (kg/m$^3$) is a density of the fluid; and $\mu$ (kg/m • h) is a viscosity of the fluid. As apparent from this equation, in the same pipe diameter, the more the flow velocity U or the flow rate grows, the more the turbulent flow rate is liable to be caused. When the flow rate is reduced and the laminar flow state is caused, a film heat transfer coefficient between a pipeline wall face and a fluid is notably reduced, and an amount of heat conduction is decreased, so that heating/cooling efficiency is markedly lowered. Accordingly, it is important for enhancing heat conduction efficiency in heating or cooling to allow a heat transfer medium to flow on a turbulent condition.

The second point of the present invention is that the heat transfer medium passages 8 are connected to the inlet and outlet collecting pipes in a pass number reduced to the utmost, preferably in one pass, thereby reducing a length of the heat transfer medium passages to the utmost to reduce the pressure loss so that a flow rate (that is, flow velocity) is increased by that much. In this case, the inlet collecting pipe 9 and the outlet collecting pipe 10 have larger pipeline diameters than those of the heat transfer medium passages 8 and may be connected respectively to the heat transfer medium-circulating lines via the switching valves 17, 18 to allow the whole heat transfer medium to flow in the same direction or may be connected to them such that every half of the heat transfer medium flows in a reverse direction. However, the passages are preferably in one pass system.

In a conventional case, a lot of the heat transfer medium passages (pipelines) 8 in the mold are, as shown in Fig. 5, allowed to pass through the mold in the manner of "drawing with one stroke" in which a single pipe or, in some cases, plural pipes stay in a relation of a series path and are usually connected to the circulating lines 15, 15' and 16, 16'. They have never been connected as shown in Fig. 4, which is one example of the present invention such that the heat transfer medium is allowed to pass in parallel and preferably in only one pass. This is because when the flow rate is the same at an inlet (or outlet), the flow velocity in the respective pipelines is reduced in a parallel path, and it has been deemed difficult to increase the Reynolds number described above to cause a turbulent flow state.

The present inventors used a common mold and mold temperature-controlling equipment to connect the heat transfer medium passage pipes in the respective systems of such a series path as shown in Fig. 5 and a parallel path as shown in Fig. 4 and investigated the flow rates and flow velocities of the heat transfer medium in the respective cases in detail. First, it has been found that in the case of a series path usually recommended as shown in Fig. 5, a pressure loss in the pipe is large beyond expectation, and only the volume far below a maximum discharge capacity of a pump installed in the mold temperature-controlling equipment flows and that this makes the heat transfer rate very low. On the other hand, experiments were carried out connecting the passages in a parallel path as shown in Fig. 4 to find that the pressure loss was notably reduced and the whole flow rate was increased to a large extent and that the flow velocities in the inside of the respective pipelines were almost the same as those in the case of the series path and a turbulent flow state was sufficiently generated. If a turbulent flow state is caused in the inside of the pipeline, the film heat transfer coefficient becomes sufficiently large, and therefore the heat transfer efficiency in heating or cooling shall not be damaged.

The third point of the present invention is that the inlet side collecting pipe 9 and the outlet side collecting pipe 10 are connected to the circulating lines 15, 15' and 16, 16' communicating with the high temperature heat transfer medium-feeding equipment 13 and the low temperature heat transfer medium-feeding equipment 14 in the outside via the switching valves 17, 18, and $A_0$ and $B_0$ coming from the respective circulating lines are alternately switched by switching operation of the switching valves 17, 18 and fed into the heat transfer medium passages 8 from the inlet side collecting pipe 9 to flow into the outlet side collecting pipe 10. In this case, the high temperature (or low temperature) heat transfer medium-feeding equipment 13 (or 14) is equipped with a heat transfer medium storage tank, a pump and a heater (or a cooler), and the heat transfer medium circulating lines including the above heat transfer medium-feeding equipment may be provided with by-pass lines. The switching valves 17, 18 for switching $A_0$ and $B_0$, coming from the respective circulating lines may be such that one of $A_0$ or $B_0$ is shut down when the other is fed from the inlet side collecting pipe 9 into the heat transfer medium passages 8.

In this case, the feeding pump which is built in the heat transfer medium-feeding equipment may be stopped at the same time as shutting down or may be switched over to the circulating line using a by-pass line without stopping. The switching valves 17, 18 are, as shown in Fig. 4, preferably three-way switching valves each one of which is disposed onto a confluent line communicating the circulating lines to the inlet side collecting pipe 9 or the outlet side collecting pipe 10, or they may be cutoff values which are individually installed in the respective circulating lines 15, 15' and 16, 16' so that the circulating lines are communicated to the confluent line with the valves inversely opened and closed alternately. Further, they may be cutoff values which are individually installed and the circulating lines are connected directly to the inlet side collecting pipe 9 and the outlet side collecting pipe 10 respectively with the cutoff valves inversely opened and closed alternately. A switching system such as a solenoid-operating type valve, an electromagnetic type valve and others can be used for switching operation of these switching valves, and the switching is preferably carried out automatically using a timer.

The fourth point of the present invention is that $A_0$ or $B_0$ is allowed to simultaneously flow into the heat transfer medium passages 8 each at the same temperature in one pass by switching the respective circulating lines preferably to switch the cavity surface temperature over to a high temperature or a low temperature in a short time. In the case of the preceding series path usually recommended as shown in Fig. 5, the heat transfer medium passes through the mold many times in the manner of "drawing with one stroke" and therefore the temperature of the heat transfer medium itself at the inlet into the mold changes in every pass. Accordingly, it is not avoided that the heat transfer rate in the mold becomes uneven and is reduced.

In contrast with this, in the case of a parallel path as shown in Fig. 4 in the present invention, the inlet temperatures of the heat transfer media which simultaneously flow from the inlet collecting pipe 9 to branching pipes 11 are the same temperature, and a large amount of the heat transfer medium passes through the system in a short time preferably in only one pass. Accordingly, the temperature is less lowered in the system, and therefore the heat transfer rate grows large by increasing a temperature difference in heat transfer in the system. In addition thereto, the temperature is even among the passages 8, and the cavity surface temperature can be switched over to a high temperature or a low temperature without using the other auxiliary heating equipment (heating by radiation and high frequency induction heating equipment). Accordingly, there is the effect that a time of one cycle in blow molding is shortened to a large extent. In particular, it is important that in the high (low) temperature heat transfer medium-feeding equipment, a difference between the outlet temperature and the inlet temperature of the heat transfer medium, that is, a change in the temperature of the heat transfer medium which comes back passing through the circulating line is small to the utmost, and depending on a length of a pipeline, it is 5°C or lower, preferably 3°C or lower and more preferably 1°C or lower. In particular, it is desired that a temperature difference of the heat transfer medium at the inlet and the outlet in the mold is 1°C or lower, preferably substantially zero.

In the case where the mold has a complicated shape such as a curved shape, there is the possibility that the flow rate of the medium flowing in the respective branching pipes 11 changes and the temperature in the mold can not evenly be controlled. In this case, adjusting valves such as needle valves may be installed in the respective branching pipes 11 to finely control the flow rate of the medium flowing in the respective branching pipes 11. For example, the adjusting valve mounted on the branching pipe 11 positioned in the downstream part of the collecting pipe 9 is opened as much as possible to make it easy to flow the medium, and on the contrary, the adjusting valve mounted on the branching pipe 11 positioned in the upstream part of the collecting pipe 9 is closed as much as possible to make it hard to flow the medium, whereby the temperature can more evenly be controlled over the whole mold.

$A_0$ and $B_0$ used in the present invention are not avoided to be mixed in a switching stage, and therefore the same kind of heat transfer media which do not cause troubles even if mixed is preferably used. In general, water, steam, oil and other various organic heat transfer media can suitably be used for the heat transfer medium in this case. With respect to the most preferred heat transfer medium particularly in terms of easiness in handling, high temperature water (high pressure) having a temperature of 100°C or higher is used for the high temperature heat transfer medium $A_0$, and low temperature water having a temperature of lower than 100°C is used for the low temperature heat transfer medium $B_0$. However, in the case of blow molding in which a very high temperature has to be maintained, a high pressure facility for holding high temperature water is required since a pressurized state has to be maintained in order to inhibit high temperature water from vaporizing. In such case, the high pressure facility can be omitted by using organic heat transfer media having a high boiling point. In this case, however, they are preferably used on a temperature condition that organic heat transfer media in a low temperature state do not become too viscous to bring about troubles in maintaining a turbulent flow state.

When water is used for the heat transfer medium, it is considered as well to use steam in stead of liquid water. Proposed in, for example, Japanese Patent Application Laid-Open No. Hei 8-276433 is a method in which a thin wall mold having a space provided on a side opposite to a cavity face is employed, and the mold is heated by steam and cooled by spraying water through the space. In this case, the steam is of a high temperature, so that airtightness of the mold and the pipejoint parts is required, and attention has to be paid in handling because of great danger when leaked. Further, use of radiation heating and high frequency induction heating equipment as auxiliary heating equipment leads to installing an expensive facility as described above and further, they are liable to cause an uneven temperature on a mold surface and therefore are difficult to handle as well.

(2) Expansion element of mold equipment

Mold equipment designed according to the fundamental elements of the present invention can sufficiently achieve the objects of the present invention. A technical point of embodiment for shortening a molding cycle while using the mold equipment satisfying the fundamental elements is defined by "expansion element" and shall be explained below in detail.

First, in a preferred embodiment of the mold equipment in the present invention, as schematically shown in Fig. 1, a pair of the left and right molds 6, 6' comprise separate bodies of the mold structures 5, 5' forming the cavity surfaces and the mold bodies 7, 7'; the heat transfer medium passages 8, 8' are made in the inside of the above mold structures 5, 5'; in particular, the mold structures 5, 5' are constituted such that they are heated or cooled by means of a heat transfer medium. This constitution provides the effects that the weight of the mold structures 5, 5' forming the cavity surfaces is reduced and a heat capacity of the mold in which a temperature has to be controlled is decreased so that the heat transfer response speed is more enhanced, and therefore the molding cycle can further be shortened. In this case, insulating thin layer materials 18, 18' having a low thermal conductivity may be allowed to be present over the whole back faces of the mold structures 5, 5' forming the cavities to be tightly laminated on the mold bodies 7, 7', or a temperature of the mold bodies 7, 7' may be controlled separately and independently.

The insulating thin layer material used for such purpose shall not specifically be restricted as long as it is a material having good insulating effect, preferably a low heat conductivity of 0.001 to 1.0 (kcal/m・hr・°C) and a compressive strength as high as 1000 to 100000 (kgf/cm$^2$) in heating, and any materials can be used. In general, used are reinforcing materials + thermoplastic resin composite plates such as glass/phenol resin and reinforcing materials + inorganic material composite plates such as asbestos/cement. The insulating thin layer material has a thickness falling preferably in a range of 10 to 30 mm, and if it is 30 mm or more, the insulating material is increased in a compressive distortion in applying pressure to produce dislocation or gap on a mating face of the mold. Accordingly, such a thickness is not preferred. On the other hand, if it is 10 mm or less, the insulating effect is not satisfactory, and therefore it is not preferred as well.

In the mold equipment in the present invention, the heat transfer medium passages in the mold structures 5, 5' forming the cavities for blow molding are pipelines which are drilled along the cavity surface and are disposed in a linear and/or almost linear parallel path such that respective pipes are parallel. The diameter thereof is selected preferably from a range of 5 to 15 mm. If the diameter is less than 5 mm, the pressure loss is increased, and the flow rate is reduced. Accordingly, such a diameter is not preferred. On the other hand, if the diameter exceeds 15 mm, the flow velocity is reduced, so that the heat transfer coefficient is decreased, and therefore it is not preferred as well. The heat transfer medium passage pipelines described above are advantageous in terms of heating/cooling efficiency, in the case that they close to each other as long as processing accuracy permits, and a center line distance between the respective pipelines falls preferably within 50 mm. For the same reason, they are advantageously disposed close to the cavity surface as long as the needed mold strength can be maintained, and the shortest distance between the cavity surface and the pipeline center line falls preferably within 30 mm.

In the mold equipment satisfying the fundamental structural elements in the present invention, the valves 17, 18 for switching the high temperature heat transfer medium and the low temperature heat transfer medium are installed close to the cavity surface and disposed such that a pipeline length between the valves and the mold is shortened, whereby the molding cycle can further be shortened. In general, in the case where, as is the case with the present invention, high temperature water for heating and low temperature water for cooling are allowed to flow as the heat transfer medium through the same passages in the mold by switching the valves 17, 18 at the inlet and the outlet to the mold, high temperature water remaining in the medium-feeding pipe and the pipeline in the mold flows into the low temperature water tank when low temperature water is fed into the mold, and a water temperature in the low temperature water tank goes up, so that the cooling efficiency is reduced.

In contrast with this, when low temperature water is fed into the mold, low temperature water remaining in the medium feeding pipe and the pipeline in the mold flows into the high temperature water tank, and a water temperature in the high temperature water tank goes down, so that the heating efficiency is reduced. Accordingly, as described above, the valves 17, 18 for switching high temperature water and low temperature water are installed close to the mold and disposed such that a pipeline length between the valves and the mold becomes preferably 2 m or less, whereby the remaining high temperature water and the remaining low temperature water can be reduced and the molding cycle can be shortened.

A material of the mold used in the present invention shall not specifically be restricted and includes materials of a mold which have so far been used. To be specific, examples thereof include iron or steel comprising iron as a principal component, aluminum or an alloy comprising aluminum as a principal component, a zinc alloy and the like. Further, air-discharge holes can be provided on the cavity surface of the mold used in the present invention at suitable intervals for the purpose of effectively sucking and removing the air present between the parison and the mold.

(3) Blow molding method

Next, the blow molding method of the present invention shall be explained.

In order to improve surface smoothness of the blow-molded article and take out the molded article from the mold without deforming it, the following two conditions have to be satisfied:

(1) in contacting with the parison, the mold temperature is higher than at least a DTUL (deflection temperature under loading) of the outer layer material, and
(2) when taking out the molded article from the mold, the mold temperature is lower than at least a DTUL of the inner layer material.

Particularly a preferred embodiment in the blow molding method in the present invention is a multilayer blow molding method using plural resins having different DTUL values, wherein displayed is the effects that improvement in the transferability of the mold surface is contributed by a front side outer layer resin (A1 resin in Fig. 2 and Fig. 3) having a low DTUL value and shortening of the molding cycle time is contributed by a back side outer layer resin A2 and inner layer resins B and C each having a high DTUL value, and the above effects have made it possible to satisfy the two conditions described above without increasing the molding cycle time.

In this case, main emphasis is put on providing the blow-molded article having good surface smoothness without raising the production cost. A comparison of a conventional technique with the multilayer blow molding method of the present invention is arranged as shown in Table 1 from a qualitative point of view.

Table 1

| | Temperature condition | Mold transferability | Molding cycle |
|---|---|---|---|
| Conventional technique | | | |
| a) only cooling | Tm<T | X | ◎ |
| b) cooling/heating switching | Tm2<T<Tm1 | ◎ | X |
| Present invention | | | |
| c) cooling/heating switching | To<Ti (in the case of single layer To = Ti) To<Tm1 Tm2<Ti (provided that Tm2<Tm1) | ◎ | ○ |

〈Definition of codes〉

| •DTUL of material in single layer blow molding | T (°C) |
|---|---|
| •DTUL of material in multilayer blow molding (front side outermost layer resin) | To (°C) |

(continued)

| ditto | Ti (°C) |
|---|---|
| (back side outermost layer resin and inner layer resin) | |
| (provided that Ti shall be a lower DTUL value of either back side outermost layer resin or inner layer resin) | |
| •Mold temperature in molding at a fixed mold temperature | Tm (°C) |
| •Mold temperature in molding by switching heating/cooling | Tm1 (°C) in heating (starting blowing) |
| ditto | Tm2 (°C) in cooling (taking out product) |

The temperature condition shall by no means be restricted as long as the relations described above are satisfied, and a temperature difference between the mold temperature and the DTUL of the resins is preferably 10°C or higher, more preferably 15°C or higher. If Tm1 - To is lower than 10°C, the transferability of the mold surface is not satisfactory. If Ti - Tm2 is lower than 10°C, the cooling efficiency of the product is reduced, and the molding cycle time is increased. Accordingly, when only cooling is carried out or an insulated mold is used, a value of a difference between the DTUL's of the outer layer resin and the inner layer resin $\Delta T = Ti - To$ is preferably 20°C or higher, more preferably 30°C or higher.

In the single layer blow molding method, when a temperature difference of the mold temperature and the DTUL of the resin shall be 20°C ($T - Tm2 = Tm1 - T = 20°C$), a mold temperature difference in heating and cooling $\Delta Tm = Tm1 - Tm2$ shall be 40°C. On the other hand, in the multilayer blow molding method, when resins to be $(Ti - To) = 20°C$ are selected and molded under the same condition ($Tm1 - To = Ti - Tm2 = 20°C$) in the case of switching heating/cooling (switching cooling/heating), the molding becomes possible at $\Delta Tm = Tm1 - Tm2 = 40 - (Ti - To) = 20°C$. That is, if materials having a larger $(Ti - To)$ are selected, the mold temperature difference in heating and cooling can be reduced more, and the molding cycle time can be shortened so much. The molding cycle is preferably shortened by maintaining Tm2 at To or higher. However, Tm2 may be To or lower in a certain case. In this case, the molding cycle time is prolonged only a little, and the mold transferability remains unchanged.

The DTUL (deflection temperature under loading) described in the present invention is an index for heat resistance of plastic and provided in ASTM D-648. To be specific, it is defined as a temperature at which deflection caused by loading reaches 0.254, wherein a test piece having a length of 127 mm, a width of 12.7 mm and a thickness of 6.4 mm is put on a supporting table having a distance of 100 mm between fulcrums; a bending stress of 0.45 MPa or 1.81 MPa is applied to the center thereof; and the temperature is elevated at 2°C/minute (hereinafter, when distinguished, one obtained under the former condition shall be called DTUL-1, and one obtained under the latter condition shall be called DTUL-2).

The resins capable of being used in the present invention shall not specifically be restricted as long as a DTUL of the resin constituting the front side outer layer is lower than a DTUL of the resin constituting the back side outer layer and the inner layer and they are thermoplastic resins which can be subjected to usual blow molding, and considering the prevention of layer-peeling (delamination) and problems of scrap return and recycle, combinations shown in Table 2 are suitably used.

Table 2

| No. | Front side outer layer resin | Back side outer layer and inner layer resin |
|---|---|---|
| 1 | All thermoplastic resins | Those obtained by adding fillers to resins described left |
| 2 | LDPE | HDPE or PP |
| 3 | LLDPE | HDPE or PP |
| 4 | EPR or EPDM | HDPE or PP |
| 5 | SBS or SEBS | GPPS, HIPS or ABS |
| 6 | GPPS or HIPS | ABS |
| 7 | MS | Heat resistant ABS |
| 8 | ABS | Heat resistant ABS |

Table 2 (continued)

| No. | Front side outer layer resin | Back side outer layer and inner layer resin |
|---|---|---|
| 9 | ABS | PC |
| 10 | ABS | PC/ABS alloy |
| 11 | PET | PC |

A wall thickness ratio of the outer layer resin to the inner layer resin shall not specifically be restricted. The thinner the outer layer is, the more the molding cycle can be shortened, and the thicker the outer layer is, the more the surface smoothness is liable to be provided. In this respect, usually, a ratio of out layer wall thickness/inner layer wall thickness is selected preferably in a range of 1/20 to 1/1. If outer layer wall thickness/inner layer wall thickness falls in a range of <1/20, the inner layer material having a high DTUL exerts too large influence to come satisfactory in the transferability. On the other hand, if outer layer wall thickness/inner layer wall thickness falls in a range of >1/1, the outer layer material having a low DTUL has a larger structural ratio, so that it takes long time for cooling and the molding cycle is prolonged.

Next, a specific controlling method of Tm1 and Tm2 settled as described above shall be explained. In the blow molding method in which the blow molding apparatus of the present invention is used and in which a heat transfer medium having a high temperature is passed through the heat transfer medium passages from immediately before blow molding through the blow molding stage to maintain the cavity surface at a high temperature (Tm1) and a heat transfer medium having a low temperature is passed through the heat transfer medium passages in the cooling stage of the blow-molded article to maintain the cavity surface at a low temperature (Tm2), the present invention is characterized by that the heat transfer medium is provided with a sufficiently fast flow velocity so that it passes on a turbulent flow condition either at a high temperature or a low temperature.

In this case, particularly liquid water is preferably used as the heat transfer medium in order to allow the good mold transferability to be compatible with the short molding cycle in the blow molding method. Water has a low viscosity and therefore can be provided with a sufficiently fast flow velocity so that it passes through the pipelines in a turbulent flow state either at a high temperature or a low temperature. In this case, the Reynolds number is preferably 2100 or more. In an actual case, the Reynolds number falling in a range of 2100 to 10000 is a boundary between laminar flow and turbulent flow and gives an ambiguous condition, so that it is more preferably 10000 or more.

The specific blow molding method of the present invention is carried out in Fig. 1, for example, according to the following procedure. First, the mold equipment of the present invention for blow molding is used, and high temperature water of 100°C or higher as a high temperature heat transfer medium is allowed to flow into the pipelines 8, 8' in the mold to elevate the surface temperature of the mold structures 5, 5' up to a temperature (Tm1) of not lower than a DTUL (To) of a resin which is intended to be molded, particularly a front side outer layer resin. Then, a thermoplastic resin molten by means of the extruder 1 for blow molding according to the present invention is allowed to flow into the die head 2 to form the cylindrical multilayer pre-form (parison) 3. The parison 3 described above is introduced into the cavity space of a pair of the molds 6, 6' which are opened to left and right and stay in a standby position, followed by closing the molds 6, 6'. Then, air is blown into the inside of the parison 3 from the air-blowing equipment 4 to press it onto the mold surface to thereby mold the resin in a mold form. Next, low temperature water of lower than 100°C is introduced into the passages by operating the switching valves 17, 18 described above to lower the mold surface temperature down to a temperature (Tm2) of not higher than a DTUL (Ti) of the inner resin, whereby the resin is sufficiently solidified. Then, the molds 6, 6' are opened, and the molded article can be taken out.

(4) Blow-molded article

The blow-molded article of the present invention is a thermoplastic resin-molded article which is molded in one molding cycle of 3 minutes or shorter by using the mold equipment for blow molding of the present invention and the blow molding method described above. It is a molded article characterized by that the outside surface of the product is composed of reins each having different (the same, in the case of a single layer) properties on the left and right sides with the parting face of the mold being a boundary and that the surface thereof satisfies at least one surface characteristic of a surface roughness of 0.2 μm or less which is defined by a center line average roughness (Ra) provided in JIS-B06001 and a 60 degree specular glossiness of 60 % or more which is defined in JIS-K7105. The molded article described above is an example molded by means of a mold having a specular cavity surface but shall by no means be restricted by it. For example, fine corrugations called "crimps" are produced on the cavity surface, and a molded article onto which the cripms are transferred well without damaging the molding cycle is included in the present invention.

Materials used for the blow-molded article of the present invention shall not specifically be restricted as long as they are usual blow-moldable thermoplastic resins. There can be used, for example, various rigid resins such as high density polyethylene (HDPE), polypropylene (PP), polyethylene-propylene copolymers, general purpose polystyrene (GPPS), high impact polystyrene (HIPS), ABS resins, polyvinyl chloride (PVC), polyacetal, polyethylene terephthalate (PET), polybutylene terephthalate (PBT), polycarbonate (PC), various polyamides (PA), modified polyphenylene ether (PPE), polyarylate (PAR), polyphenylene sulfide (PPS), polysulfone, polyethersulfone, polyetherketone (PEK), polyetheretherketone (PEEK), thermoplastic polyimide (PI) and thermoplastic fluororesins.

In addition thereto, examples thereof include various non-rigid resins such as ethylene-propylene rubber (EPR), ethylene-vinyl acetate copolymers (EVA), low density polyethylene (LDPE), linear low density polyethylene (LLDPE), ethylene-propylene-diene monomer copolymers (EPDM), styrene-butadiene-styrene copolymers (SBS), styrene-ethylene-butylene-styrene copolymers (SEBS), styrene-isoprene-styrene copolymers (SIS), vinyl chloride base thermoplastic elastomers, urethane base thermoplastic elastomers, polyester base thermoplastic elastomers, polyamide base thermoplastic elastomers and fluororesin base thermoplastic elastomers. They can be used alone or in the form of a mixture of two or more kinds thereof and a polymer alloy. However, they shall by no means be restricted thereto.

Further, elastomers, resin components other than the thermoplastic resins, pigments, organic/inorganic fillers and various additives can be added as well, if necessary, to the thermoplastic resins used for the blow-molded article of the present invention as long as they do not damage the objects of the present invention. Among them, any of tabular, granular and fibrous fillers may be used for the organic/inorganic fillers which are used for the purpose to provide the molded article with a rigidity. To be specific, the tabular or granular fillers include various metal powders (aluminum powder and the like), metal oxides (magnesium oxide, titanium oxide, alumina and the like), metal hydroxides (magnesium hydroxide, aluminum hydroxide and the like), carbonates and sulfates (calcium carbonate, magnesium carbonate, barium sulfate and the like), synthetic silicates (magnesium silicate, aluminum silicate and the like), natural silicates (talc, mica, kaolin and the like), silicon carbide powder, synthetic and natural silicas, carbon black, wooden powder and cotton powder.

Further, the fibrous fillers include synthetic high molecular fibers (nylon, PET fiber, aramide fiber, teflon fiber and the like), natural high molecular fibers (wool, cotton, pulp and the like), glass fibers, carbon fibers (carbon whisker, graphite fiber and the like), ceramic fibers (silica・alumina fiber, potassium titanate fiber, asbestos fiber and the like), silicon carbide fiber・whisker and metallic fibers (boron fiber, steel fiber, aluminum fiber and the like). Other various additives include plasticizers, flame retardants, heat stabilizers, antioxidants, light stabilizers, UV absorbers, lubricants, antistatic agents, mold releasing agents, foaming agents, nucleating agents, colorants, cross-linking agents and auxiliary dispersants.

Examples

The present invention shall specifically be explained below with reference to examples.
Molding conditions in the examples are shown below.

〈Single layer blow molding conditions〉

Molding machine: NB120S multilayer blow molding machine manufactured by The Japan Steel Works, Ltd.
Clamping force: 120 tonf
Extruder: inner layer 90 mm∅, L/D = 29
Accumulator: 15L
Die: single layer 350 mm∅,
Mold: 700 × 450 × 20 mm plate

〈Multilayer blow molding conditions〉

Molding machine: NB120S multilayer blow molding machine (4 kinds, 3 layers) manufactured by The Japan Steel Works, Ltd.
Clamping force: 120 tonf
Extruder: inner layer 90 mm∅, intermediate layer 50 mm∅, front side outer layer 65 mm∅, back side outer layer 65 mm∅
Mold: 700 × 450 × 20 mm plate

Cavity surface: specular finish <Ra 0.1 μm

Blowing pressure: 0.6 MPa

Example 1

Explanations shall be given with reference to Fig. 1 and Fig. 4.

The mold described above was mounted on a platen of the blow molding machine described above, and the respective pipelines were connected in a parallel path as shown in Fig. 4. Further, they were connected to high temperature water-feeding equipment 13 and low temperature water-feeding equipment 14 via three way valves (17, 18). The high temperature water-feeding equipment 13 was set at a temperature of 120°C, and the low temperature water-feeding equipment 14 was set at a temperature of 80°C. First, the valves 17, 18 were opened to the high temperature water-feeding equipment 13 side to introduce high temperature water of 120°C into the mold to elevate a temperature of the cavity surface of the mold to 115°C.

An ABS resin (Estylene ABS500; DTUL-2: 85°C) manufactured by Nippon Steel Chemical Co., Ltd. was used for a front side outer layer resin, and a heat resistant ABS resin (Estylene ABS360; DTUL-2: 105°C) manufactured by Nippon Steel Chemical Co., Ltd. was used for a back side outer layer and an inner layer resin to carry out multilayer blow molding.

First, the above resins were fed from raw material-feeding equipment to an extruder 1 and molten and plasticized at 200°C. Further, a cylindrical parison 3 was formed through a die 2 and introduced into a cavity space of molds 6, 6'. Then, the molds 6, 6' were closed, and the parison 3 was contacted with the cavity of the mold which was heated in advance to 115°C. Simultaneously, an air-blowing needle 4 was driven into the parison to blow air at a pressure of 0.6 MPa, whereby the parison was pressed onto the cavity surface. After prescribed time was passed, the valves 17, 18 were switched over to the low temperature water-feeding equipment 14 side to cool the cavity surface of the mold down to 95°C. After finishing cooling and solidification of the resin, the molds 6, 6' were opened to take out a blow-molded article. At the same time as opening the molds 6, 6', the valves 17, 18 were switched again over to the high temperature water-feeding equipment 13 side to heat the cavity surface to 115°C for the sake of next molding. As soon as heating was completed, next molding cycle was started.

The molding results such as glossiness of the resulting molded article and a molding cycle time are shown in Table 3. High temperature water and low temperature water flowed in the pipelines in the mold at a flow velocity of 3 m/second in turbulent flow having a Reynolds number of about 10000 (average value at a high temperature and a low temperature).

Example 2

Multilayer blow molding was carried out in the same manner as in Example 1, except that the ABS resin (Estylene ABS500; DTUL-2: 85°C) manufactured by Nippon Steel Chemical Co., Ltd. was used for the front side outer layer resin, and a heat resistant ABS resin (Estylene ABS380; DTUL-2: 115°C) manufactured by Nippon Steel Chemical Co., Ltd. was used for the back side outer layer resin and the inner layer resin and that the heating/cooling conditions were under a mold cavity surface temperature of 130°C in heating (starting blowing) and a mold cavity surface temperature of 100°C in cooling (taking out the product). The molding results such as glossiness of the resulting molded article and a molding cycle time are shown in Table 3.

Example 3

Used were an ABS resin (Estylene MS300; DTUL-2: 87°C) manufactured by Nippon Steel Chemical Co., Ltd. for the front side outer layer resin, the heat resistant ABS resin (Estylene ABS360; DTUL-2: 105°C) manufactured by Nippon Steel Chemical Co., Ltd. for the back side outer layer resin and the heat resistant ABS resin (Estylene ABS380; DTUL-2: 115°C) manufactured by Nippon Steel Chemical Co., Ltd. for the inner layer resin, and multilayer blow molding was carried out under the heating/cooling conditions of a mold cavity surface temperature of 125°C in heating (starting blowing) and a mold cavity surface temperature of 95°C in cooling (taking out the product). The molding results are shown in Table 3.

Comparative Example 1

The same mold as that used in Example 1 was used to carry out molding in the same manner as in Example 1, except that the respective heat transfer medium pipelines were connected in a series path as shown in Fig. 5 (a heat transfer area of the heat transfer medium passage pipelines was the same as in Example 1). The molding results are shown in Table 3. A molding cycle time required for obtaining a molded article having the same glossiness of 92 % as that of the sample obtained in Example 1 was about 40 minutes. High temperature water and low temperature water flowed in the pipelines in the mold at a flow velocity of 0.6 m/second and a Reynolds number of about 2000 (average value at a high temperature and a low temperature).

Example 4

The mold described above was mounted on the platen of the blow molding machine described above, and the respective pipelines were connected in a parallel path as shown in Fig. 4. Further, they were connected to the high temperature water-feeding equipment 13 and the low temperature water-feeding equipment 14 via the three way valves (17, 18). The high temperature water-feeding equipment 13 was set at a temperature of 120°C, and the low temperature water-feeding equipment 14 was set at a temperature of 80°C. First, the valves 17, 18 were opened to the high temperature water-feeding equipment 13 side to introduce high temperature water into the mold to elevate a temperature of the cavity surface of the mold up to 120°C.

An ABS resin Cycolac EX22C manufactured by Ube Cycon , Ltd. was used for a raw material resin. This resin had a deflection temperature under loading (DTUL-1: ASTM D-648, based on a load of 0.45 MPa) of 100°C. The above resin was fed from the raw material-feeding equipment to the extruder 1 and molten and plasticized at 210°C. Further, a cylindrical parison 3 was formed through the die 2 and introduced into a cavity space of the molds 6, 6'.

Then, the molds 6, 6' were closed, and the parison 3 was contacted with the cavity of the mold. Simultaneously, the air-blowing needle 4 was driven into the parison to blow air at a pressure of 0.6 MPa, whereby the parison was pressed onto the cavity surface. After prescribed time was passed, the valves 17, 18 were switched over to the low temperature water-feeding equipment 14 side to cool the cavity surface of the mold down to 80°C. After finishing cooling and solidification of the resin, the molds 6, 6' were opened to take out a blow-molded article. At the same time as opening the molds 6, 6', the valves 17, 18 were switched again over to the high temperature water-feeding equipment 13 side to heat the cavity surface to 120°C for the sake of next molding. As soon as heating was completed, next molding cycle was started. The molding results such as glossiness of the resulting molded article and a molding cycle time are shown in Table 3. High temperature water and low temperature water flowed in the pipelines in the mold at a flow velocity of 3 m/second and a Reynolds number of about 10000 (average value at a high temperature and a low temperature).

Example 5

An ABS resin (Estylene ABS350; DTUL-2: 95°C) manufactured by Nippon Steel Chemical Co., Ltd. was used to carry out single layer blow molding under the heating/cooling conditions of a mold cavity surface temperature of 115°C in heating (starting blowing) and a mold cavity surface temperature of 75°C in cooling (taking out the product). The molding results are shown in Table 3.

Comparative Example 2

The same mold as that used in Example 4 was used to carry out molding in the same manner as in Example 4, except that the respective heat transfer medium pipelines were connected in a series path as shown in Fig. 5 (a heat transfer area of the heat transfer medium passage pipelines was the same as in Example 4). A molding cycle time required for obtaining a molded article having the same glossiness of 95 % as that of the sample obtained in Example 4 was about 20 minutes. High temperature water and low temperature water flowed in the pipelines in the mold at a flow velocity of 0.6 m/second and a Reynolds number of about 2000 (average value at a high temperature and a low temperature).

Table 3

| Example | Mold temperature (°C) | | DTUL (°C) of resin used | | | Molded article surface glossiness (%) | Molding Cycle (second) |
|---|---|---|---|---|---|---|---|
| | Start blowing | Take out product | Front side outer layer | Back side outer layer | Inner layer resin | | |
| 1 | 115 | 95 | 85 | 105 | 105 | 92 | 90 |
| 2 | 130 | 100 | 85 | 115 | 115 | 95 | 100 |
| 3 | 125 | 95 | 87 | 105 | 115 | 94 | 100 |
| 4 | 120 | 80 | (100: single resin used) | | | 95 | 120 |
| 5 | 115 | 75 | (95: single resin used) | | | 95 | 120 |
| Comparative example | Mold temperature (°C) | | DTUL (°C) of resin used | | | Molded article surface glossiness (%) | Molding Cycle (second) |
| | Start blowing | Take out product | Front side outer layer | Back side outer layer | Inner layer resin | | |
| 1 | 115 | 95 | 85 | 105 | 105 | 92 | 2400 |
| 2 | 120 | 80 | (100: single resin used) | | | 95 | 1200 |

DTUL: based on ASTM D-648. DTUL-1 in Example 4 and Comparative Example 2 and DTUL-2 in the other examples.

Glossiness: based on JIS K7105 60 degree specular glossiness

Industrial Applicability

According to the present invention, selection of resins paying attentions to DTUL, design of a mold paying attentions to fluidity of a heat transfer medium, a connecting method of mold temperature-controlling pipelines and an optimization in selection of a heat transfer medium make it possible to allow good mold transferability to be compatible with shortening of a molding cycle using conventional mold temperature-controlling equipment and provide a hollow structure product having an excellent surface appearance at a low cost, and therefore it is expected to be applied to wide fields such as home electric appliances and OA products, houshold appliances, office furniture and automobile outside plates and trim, etc.

**Claims**

1.    A blow molding apparatus comprising mold equipment, wherein said mold equipment comprises a pair of left and right molds forming a cavity; plural heat transfer medium passages branching away from an inlet side collecting pipe are disposed close to a cavity surface in the mold in a parallel path, and each passage is connected to an outlet side collecting pipe; high temperature heat transfer medium-feeding equipment for feeding a high temperature heat transfer medium and low temperature heat transfer medium-feeding equipment for feeding a low temperature heat transfer medium are connected to the inlet side collecting pipe and the outlet side collecting pipe through pipelines via switching valves to constitute independent heat transfer medium-circulating lines respectively; and the high temperature heat transfer medium and the low temperature heat transfer medium coming from the respective circulating lines are alternately switched by switching operation of the switching valves, whereby the high temperature heat transfer medium or the low temperature heat transfer medium is allowed to pass from the inlet side collecting pipe toward the outlet side collecting pipe through the respective heat transfer medium passages in the mold to switch a cavity surface temperature over to a high temperature or a low temperature in a short time.

2.    A blow molding apparatus characterized by comprising a combination of the following structural elements (a) to (c):

(a) one or plural extruders installed for the purpose of melting and extruding m kinds of resins (provided that m is 1 or more);

(b) a multilayer die head which has circular resin passages for resins to form a single layer parison or a multilayer parison of n layers, wherein n has a relation of n≦m, with m kinds of molten resins being introduced, wherein two kinds of different molten resins are introduced into at least one of said circular passages for resins; and

(c) mold equipment which is a pair of left and right molds forming a cavity for blow molding, wherein plural heat transfer medium passages branching away from an inlet side collecting pipe are disposed close to a cavity surface in the mold in a parallel path, and each passage is connected to an outlet side collecting pipe; high temperature heat transfer medium-feeding equipment for feeding a high temperature heat transfer medium and low temperature heat transfer medium-feeding equipment for feeding a low temperature heat transfer medium are connected to the inlet side collecting pipe and the outlet side collecting pipe through pipelines via switching valves to constitute independent heat transfer medium-circulating lines respectively; and the high temperature heat transfer medium and the low temperature heat transfer medium coming from the respective circulating lines are alternately switched by switching operation of the switching valves, whereby the high temperature heat transfer medium or the low temperature heat transfer medium is allowed to pass from the inlet side collecting pipe toward the outlet side collecting pipe through the respective heat transfer medium passages in the mold to switch a cavity surface temperature over to a high temperature or a low temperature in a short time.

3. The blow molding apparatus as described in claim 1 or 2, wherein the left and right molds each comprise separate bodies of a mold structure forming a cavity surface and a mold body, and heat transfer medium passages are made in the inside or on the back face of said mold structure.

4. A blow molding method in which the blow molding apparatus as described in any of claims 1 to 3 is used to allow a heat transfer medium having a high temperature to pass through heat transfer medium passages of a mold from immediately before blow molding to maintain a cavity surface at a high temperature and allow a heat transfer medium having a low temperature to pass through the heat transfer medium passages in a stage for cooling a blow-molded article to maintain the cavity surface at a low temperature, wherein the heat transfer medium is provided with a sufficiently high flow velocity so that it passes through the passages on a turbulent flow condition either at a high temperature or a low temperature.

5. A blow molding method using the blow molding apparatus as described in any of claims 1 to 3, characterized by that a cavity surface is maintained at a high temperature of not lower than a DTUL (deflection temperature under loading: based on ASTM-D648 with a load of 0.45 MPa) of a resin which is intended to be molded from immediately before blow molding through a blow molding stage; then in a stage for cooling a blow-molded article after contacting a cylindrical resin (parison) staying in a melting state with the cavity surface, the cavity surface is cooled down to a low temperature of not higher than said DTUL to thereby sufficiently solidify the resin; and then the molded article is taken out in one molding cycle of 3 minutes or shorter.

6. A blow molding method using the blow molding apparatus as described in claim 2 or 3, characterized by that an outer layer of a multilayer parison comprising n layers is composed of resins each having different properties on the left and right sides with a parting face in a pair of left and right molds being a borderline, and a DTUL (deflection temperature under loading: according to ASTM-D648 with a load of 1.81 MPa) of a resin constituting a front side outer layer is lower than a DTUL of a resin constituting a back side outer layer and an inner layer; a cavity surface is maintained at a high temperature of not lower than the DTUL of said front side outer layer resin from immediately before blow molding through a blow molding stage; then in a stage for cooling a blow-molded article after contacting the parison with the cavity surface, the cavity surface is cooled down to a low temperature of not higher than the DTUL of the back side outer layer and inner layer resin to thereby sufficiently solidify the resin; and then the molded article is taken out in one molding cycle of 3 minutes or shorter.

7. The blow molding method as described in any of claims 4 to 6, wherein high temperature water of 100°C or higher is used for the heat transfer medium having a high temperature, and low temperature water of lower than 100°C is used for the heat transfer medium having a low temperature.

8. A blow-molded article which is a hollow molded article of a thermoplastic resin molded by the blow molding method as described in any of claims 4 to 7, wherein the surface thereof satisfies at least one surface characteristic of a surface roughness of 0.2 μm or less which is defined by a center line average roughness (Ra) provided in JIS-B0601 and a 60 degree-specular glossiness of 60 % or more which is defined in JIS-K7105.

# FIG. 1

FIG. 2

# FIG. 3

A1 — A2 — B — C

# FIG. 4

# FIG. 5

# INTERNATIONAL SEARCH REPORT

| International application No. |
| --- |
| PCT/JP98/05906 |

**A. CLASSIFICATION OF SUBJECT MATTER**
Int.Cl⁶ B29C49/48, 49/64, 49/04, B29B11/10

According to International Patent Classification (IPC) or to both national classification and IPC

**B. FIELDS SEARCHED**

Minimum documentation searched (classification system followed by classification symbols)
Int.Cl⁶ B29B11/00-11/16, B29C49/00-49/80, B29C33/02, 33/04

Documentation searched other than minimum documentation to the extent that such documents are included in the fields searched

| | | | |
| --- | --- | --- | --- |
| Jitsuyo Shinan Koho | 1926-1996 | Toroku Jitsuyo Shinan Koho | 1994-1999 |
| Kokai Jitsuyo Shinan Koho | 1971-1999 | Jitsuyo Shinan Toroku Koho | 1996-1999 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP, 6-210636, A (Hashimoto Forming Industry Co., Ltd.), 2 August, 1994 (02. 08. 94), All references (Family: none) | 1, 3-8 |
| Y | JP, 62-179912, A (Beishin Kogyo K.K.), 7 August, 1987 (07. 08. 87), All references (Family: none) | 1, 3-8 |
| Y | JP, 9-277361, A (Nippon Steel Chemical Co., Ltd.), 28 October, 1997 (28. 10. 97), All references & WO, 97/38845, A | 3-8 |
| PX | JP, 10-015944, A (Taiho Kogyo Co., Ltd.), 20 January, 1998 (20. 01. 98), All references (Family: none) | 1 |
| A | JP, 59-209113, A (Toyota Motor Corp.), 27 November, 1984 (27. 11. 84), All references (Family: none) | 1 |

☒ Further documents are listed in the continuation of Box C.   ☐ See patent family annex.

| | |
| --- | --- |
| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| 26 March, 1999 (26. 03. 99) | 6 April, 1999 (06. 04. 99) |

| Name and mailing address of the ISA/<br>Japanese Patent Office | Authorized officer |
| --- | --- |
| Facsimile No. | Telephone No. |

Form PCT/ISA/210 (second sheet) (July 1992)

## INTERNATIONAL SEARCH REPORT

| International application No. |
| --- |
| PCT/JP98/05906 |

C (Continuation).  DOCUMENTS CONSIDERED TO BE RELEVANT

| Category* | Citation of document, with indication, where appropriate, of the relevant passages | Relevant to claim No. |
| --- | --- | --- |
| A | JP, 60-21229, A (Inoac Corp.), 11 September, 1991 (11. 09. 91), All references (Family: none) | 2-8 |
| A | JP, 7-205264, A (Nippon Steel Chemical Co., Ltd.), 8 August, 1995 (08. 08. 95), All references & WO, 95/18712, A1 & EP, 738580, A & US, 5780129, A & KR, 97700105, A | 2-8 |

Form PCT/ISA/210 (continuation of second sheet) (July 1992)